# EUROPEAN PATENT SPECIFICATION

(11) **EP 2 082 921 B1**
(45) Date of publication and mention of the grant of the patent: **03.07.2013**
(21) Application number: 09150852.3
(22) Date of filing: 19.01.2009
(51) Int. Cl.: B60R 9/055

(54) **Improvements in and relating to carriers**
Verbesserungen bei und in Zusammenhang mit Trägern
Améliorations de et associées à des supports

(30) Priority: 25.01.2008 GB 0801390
(43) Date of publication of application: 29.07.2009
(73) Proprietor: Rhino Products Limited, Flintshire Clwyd CH7 3PL (GB)
(72) Inventor: Spendlove, Dene Anthony, Deeside Cheshire CH5 3DA (GB)
(74) Representative: Misselbrook, Paul

(56) References cited:
- DE-A1- 4 125 136
- DE-U- 7 149 159
- DE-U1- 8 613 611
- GB-A- 2 272 426

## Description

The present invention relates to carriers, and in particular although not exclusively pipe carriers for mounting on vehicle roof racks and roof bars.

Carriers of the type connected to a vehicle's roof rack are used to transport loads, such as pipe tubes. A known carrier has a storage area and a lockable end cap. The end cap is locked so that the load cannot be stolen during its transit. Should the vehicle be involved in a crash, due to the forces experienced during the crash it is common that the end cap is smashed off and the load is spilled from the storage area.

The generic DE 4125136 discloses a pipe carrier having a storage area and a lockable end cap. The lockable end cap is pivotally connected to the storage area by a hinge that is connected to the storage area at an external periphery thereof. A lock is arranged on an external periphery of the storage area, opposite to the pivotal connection. In use, the end cap is unlocked and pivoted to an open position to load/unload pipes from the pipe carrier. The end cap is subsequently pivoted to a closed position and locked in position. In the closed position the end cap may provide a stop to prevent pipes from spilling from the storage area in the event of a crash.

Accordingly, the present invention aims to address at least one problem associated with known carriers. It is a particular aim to provide a carrier having an end cap with improved resistance to being smashed off in the event of a crash.

According to the present invention there is provided a carrier or a vehicle roof rack as specified in claim 1.

Further advantageous embodiments of the invention are specified in the dependent claims 2-9.

The spaced connections may be located three quarters of the way up the storage area from the bottom of the interior of the storage area to the top of the interior of the storage area.

The retainer may include a plate arranged, in the closed position, to extend over an opening of the storage area at that end. The plate may include arms that extend to each connection and those arms may be integral with the plate.

The carrier may include a retainer at both ends movable between the open and closed positions.

The storage area may be elongate from one end to the other. The storage area may be of constant cross section from one end to the other end. The retainer may include an aerodynamic portion extending away from the storage area and converging in at least one direction in the extent away from the storage area.

The carrier body may include a connection arranged, in use, to connect the body to a roof rack of a vehicle.

The holding assembly may include a first part on one of the retainer or body arranged to be alongside a second part of the other of the retainer or body when the retainer is in the closed position.

The first and second parts may be arranged to abut each other to resist relative movement of the first and second parts in at least one direction.

The holding assembly may include two first parts with the second part being located between the first parts when the retainer is in the closed position. The second part may be arranged to abut a selected one of the first parts to resist relative movement of the parts in two directions opposed to each other.

At least one of the first and second parts may include an opening through which a retractable latch is arranged to extend to hold the retainer in the closed position.

Both of the first and second parts may include an opening through which the latch is arranged to extend.

At least two first parts may be provided with an opening through which the latch is arranged to extend.

The or each opening may comprise a hole.

The latch may comprise a pivotally movable member movable between a latched position in which the latch extends through at least one opening and an unlatched position.

The latch may be mounted on the body.

The or each first part may be mounted on the retainer.

The or each first and second parts may comprise plate members the major faces of which are arranged alongside each other.

The carrier may include a lock arranged to releasably maintain the retainer in the closed position.

The carrier may comprise a pipe carrier.

The present invention also includes a vehicle with a carrier as herein referred and being mounted thereon.

The present invention may be carried out in practice in various ways but one embodiment will now be described, by way of example and with reference to the accompanying drawings, in which:
Figure 1 shows a perspective view of a carrier of an embodiment of the present invention in which a retainer is in an open position;
Figure 2 shows a side view showing the retainers at the end regions of the carrier in a closed position;
Figure 3 shows a bottom view of the carrier of an embodiment in a closed position; and
Figure 4 is a perspective view of the carrier connected to a roof rack.

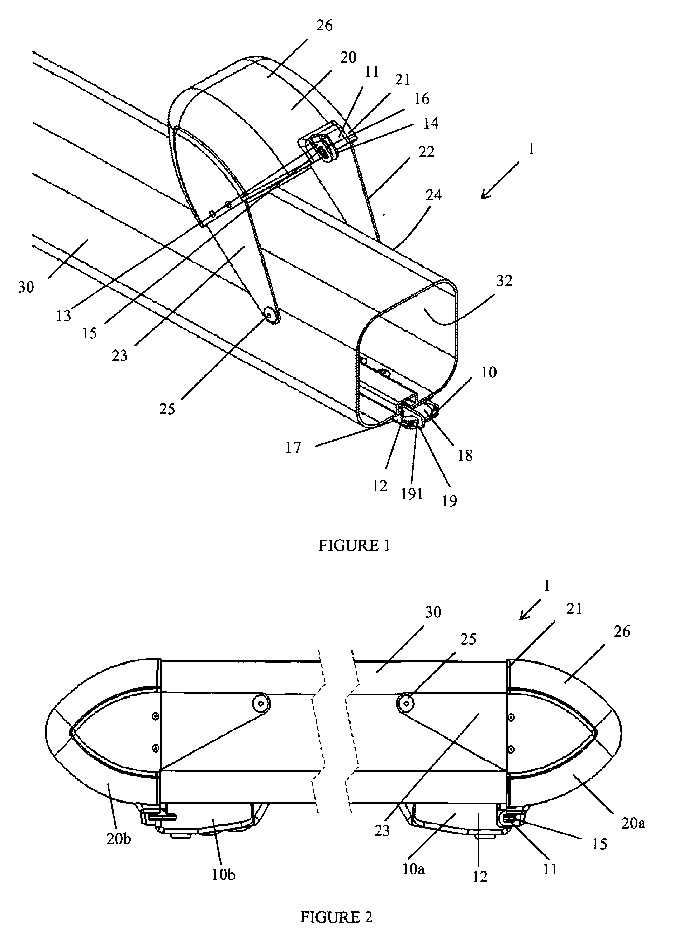

As shown in Figure 1 the carrier 1 is connected to a vehicle's roof rack and is used to transport a load between locations. The carrier 1 uses a lock assembly 10 and a retainer 20 to prevent loads from being spilled during a crash or under excessive braking.

The carrier 1 is positioned on a roof rack to run longitudinally along the length of the vehicle. The carrier 1 has a tubular carrier body 30 having a passageway 32 linking a first and a second opening located at opposed ends of the carrier body 30. The passageway 32 is a storage area in which the load is positioned through one of the first and second openings.

A first lock assembly 10a and a first retainer 20a and a second lock assembly 10b and a second retainer 20b are positioned relative to the first and second openings, respectively, to selectively close the passageway 32 to retain the load. The lock assemblies 10a, 10b and the retainers 20a, 20b are moveable between a closed position, in which the load is retained in the carrier body 30, and an open position, in which the load can be loaded or unloaded from the passageway 32.

A lock assembly 10 and retainer 20 at one end will now be described. The retainer 20 has a retaining plate 21, a first and a second arm 22, 23 a first and a second body connector 24, 25 and a plate cover 26. The first and second arms 22, 23 are integrally formed with the retaining plate 21 and extend parallel to each other from opposed edges of the retaining plate 21. The first and second arms 22, 23 are connected at their distal ends to the carrier body 30 allowing pivotal movement of the retaining plate 21 to open and close the passageway 32.

The lock assembly 10 has a first lock member 11 mounted on the retainer and second lock member 12 mounted on the body 30.

The first lock member 11 has first and second spaced catches 13, 14. The second lock member 12 has a hook 18 and a bracing element 19.

In use, with the carrier 1 in the closed position, the vehicle is used to transport the load. Should the vehicle be involved in a crash or have to brake excessively, the load will be propelled into the retaining plate 21. The forces exerted by the load on the plate 21 will attempt to push the retainer 20 longitudinally, transversely and/or vertically relative to the carrier body 30. The lock assembly 10 and retainer 20 work to absorb these forces to prevent the load from spilling out of the passageway 32.

In the locked, closed position, the retainer 20 is positioned so that the retaining plate 21 closes the passageway 32. The lock assembly 10 includes a pivotally mounted latch having a hook 18 that extends through openings 15 and 16 in the spaced catches 13, 14 to hold the retainer 20 in position. The bracing element 19 extends between the spaced catches 13, 14 and the hook 18 also extends through an opening 191 in the element 19.

Also, in the locked, closed position, the hook 18 cooperates with the catches 13 and 14 in the fore and aft direction, and vertical and transverse directions, to hold the retainer 20 in the closed position.

The lock assembly absorbs the forces exerted by the load across the catches through the abutment of one or other of the spaced catches 13, 14 with the bracing element 19.

The retainer 20 also absorbs forces by being connected to opposed sides of the carrier body 30. This arrangement results in the retainer resisting the force exerted by the load by distributing the force evenly across the retainer 20, through the first and second arms 22, 23 and connectors 24, 25 to the carrier body 30.

In the open position, the hook is pivoted clear of the openings 15, 16 and 191 and the retainer 20 is able to be pivoted to the open position.

The first and second arms 22, 23 and the first and second connectors 24, 25 are connected to an upper region of the carrier body 30 above the midpoint but below the top of the carrier body 30. The second lock member 12 is located in a lower region of the carrier body 30 and the first lock member 11 is located in a lower region of the retainer 20, i.e. the lock assembly 10 is located on a bottom surface of the carrier 1.

When a crash occurs, with the carrier 1 remaining on the roof rack, the load tends to be thrown against the plate 21 with a slight upwards thrust. Thus it may be that a force is transferred along an arm in line with the pivot point.

During said crash, the lock assembly 10 and retainer 20 can resist the forces exerted by a load with a gross mass of up to 50kg. The forces are resisted to prevent the load from spilling from the carrier body 10.

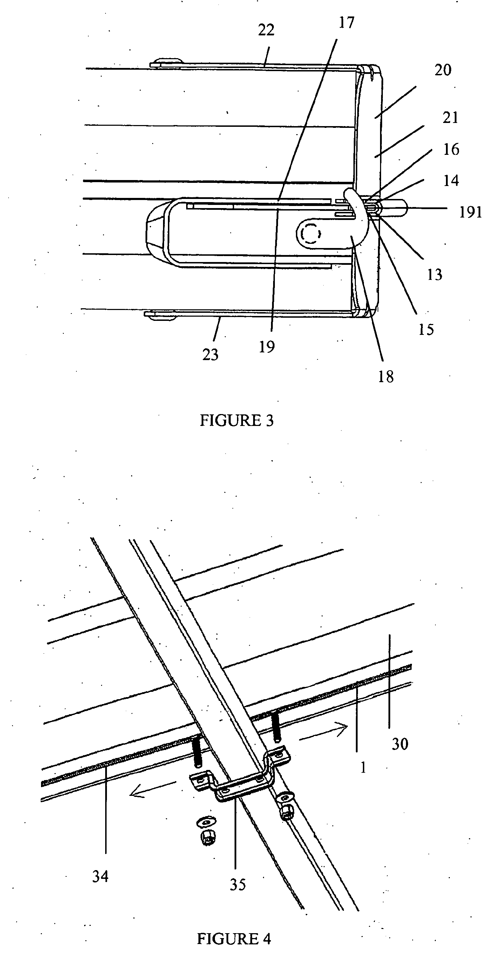

The second lock member 12 has a lock body 17 (shown in cross section in Figure 3), the hook 18 and the bracing element 19. The lock body 17 substantially surrounds the hook 18 and the bracing element 19.

The hook 18 is moved by a barrel lock having a key receiver (not shown).

As shown in Figure 4, the carrier body 30 is connected to a vehicle's roof rack with a connector 34. The connector 34 has a T-shaped groove that runs along the length of the carrier body 30. Bolt heads are positioned in the groove, and are used to fix the carrier 1 in position with a U-shaped bracket 35. The first lock member 11 also extends into the groove on a bottom surface of the carrier body 30.

In the preferred embodiment of the present invention, the retaining plate 21 and arms 22, 23 are integrally formed from a single piece of material. However, it should be understood that the retaining plate and arms can be formed separately and welded together to form that part of the retainer.

## Claims

1. A carrier (1) for a vehicle roof rack, the carrier (1) comprising:
a tubular carrier body (30) having a top surface, a bottom surface and two opposed lateral sides, which define a storage area (32) for storing articles to be transported, the storage area (32) being accessible from at least one end of the carrier body (30); and
at least one end retainer (20), each one of said at least one end retainer (20) being connected to the carrier body (30) at one of said at least one end of the carrier body (30) and being movable between an open position, in which access to the storage area (32) can be gained from said end, and a closed position, in which access from said end is denied; and
a holding assembly (10) arranged below a lower region of the storage area (32) to hold the retainer (20) in the closed position;
**characterised in that**:
the end retainer (20) is connected to the carrier body (30) by two spaced pivots (24, 25), the spaced pivots (24, 25) bieng each on a respective one of the two opposed lateral sides of the carrier body (30), spaced along the carrier body (30) away from said end where access may be gained to the storage area (32) and the spaced pivots (24, 25) being arranged to pivot about a fictive common axis, the fictive common axis extending through an upper region of the storage area (32) and between the top surface of the carrier body (30) and a mid point between the top and bottom surfaces of the carrier body (30); and
the end retainer (20) being movable between the open and closed positions by pivotal movement about each pivot (24, 25).

2. The carrier (1) of claim 1, wherein the end retainer (20) comprises a plate (21) arranged, in the closed position, to extend over an opening of the storage area (32) at that end, wherein the plate (21) comprises two arms (22, 23) that extend respectively to one of the pivots (24, 25).

3. The carrier (1) of any preceding claim, wherein the holding assembly (10) comprises a first part (11) on one of the retainer (20) or carrier body (30) arranged to be alongside a second part (12) of the other of the retainer (20) or carrier body (30) when the retainer (20) is in the closed position.

4. The carrier (1) of claim 3, wherein the first and second parts (11, 12) are arranged to abut each other to resist relative movement of the first and second parts (11, 12) in at least one direction.

5. The carrier (1) of claim 3 or claim 4, wherein the holding assembly (10) comprises two first parts (13, 14) with the second part (12) being located between the first parts (13, 14) when the retainer (20) is in the closed position.

6. The carrier (1) of claim 5, wherein the second part (12) is arranged to abut a selected one of the first parts (13, 14) to resist relative movement of the first and second parts (12, 13, 14) in two directions opposed to each other.

7. The carrier (1) of any one of claims 3-6, wherein at least one of the first and second parts (12, 13, 14) comprises an opening through which a retractable latch (18) is arranged to extend to hold the retainer (20) in the closed position.

8. The carrier (1) of claim 7, wherein the latch (18) comprises a pivotally movable member that is movable between a latched position in which the latch (18) extends through at least one opening and an unlatched position.

9. The carrier (1) of claim 8, wherein the latch (18) is mounted on the carrier body (30)

10. A vehicle comprising a carrier (1) as set out in any of claims 1-9

## Patentansprüche

1. Träger (1) für einen Fahrzeug-Dachgepäckträger, wobei der Träger (1) Folgendes aufweist:
einen röhrenförmigen Trägerkörper (30), der eine obere Oberfläche, eine untere Oberfläche und zwei einander gegenüberliegende seitliche Seiten hat, die eine Lagerfläche (32) zum Lagern von Artikeln, die zu transportieren sind, definieren, wobei die Lagerfläche (32) von mindestens einem Ende des Trägerkörpers (30) her zugänglich ist, und
mindestens einen Endhalter (20), wobei jeder des mindestens einen Endhalters (20) mit dem Trägerkörper (30) mit einem des mindestens einen Endes des Trägerkörpers (30) verbunden ist und zwischen einer offenen Position, in der der Zugang zu der Lagerfläche (32) von dem Ende her möglich ist, und einer geschlossenen Position, in welcher der Zugang von dem Ende her untersagt ist, beweglich ist, und
eine Aufnahmebaugruppe (10) die unterhalb eines unteren Bereichs der Lagerfläche (32) eingerichtet ist, um den Halter (20) in der geschlossenen Position aufzunehmen,
**dadurch gekennzeichnet, dass**:
der Endhalter (20) mit dem Trägerkörper (30) durch zwei beabstandete Schwenker (24, 25) verbunden ist, wobei die beabstandeten Schwenker (24, 25) jeweils auf einer der zwei gegenüberliegenden seitlichen Seiten des Trägerkörpers (30) sind, entlang des Trägerkörpers (30) beabstandet, von dem Ende entfernt, an dem Zugang zu der Lagerfläche (32) möglich ist, und wobei die beabstandeten Schwenker (24, 25) eingerichtet sind, um um eine fiktive gemeinsame Achse zu schwenken, wobei sich die fiktive gemeinsame Achse durch einen oberen Bereich der Lagerfläche (32) und zwischen der oberen Oberfläche des Trägerkörpers (30) und einer Mittenstelle zwischen der oberen und der unteren Oberfläche des Trägerkörpers (30) erstreckt, und
wobei der Endhalter (20) zwischen der offenen und der geschlossenen Position durch Schwenkbewegung um jeden Schwenker (24, 25) beweglich ist.

2. Träger (1) nach Anspruch 1, wobei der Endhalter (20) eine Platte (21) aufweist, die in der geschlossenen Position eingerichtet ist, um sich über eine Öffnung der Lagerfläche (32) an dem Ende zu erstrecken, wobei die Platte (21) zwei Arme (22, 23), die sich jeweils zu einem der Schwenker (24, 25) erstrecken, aufweist.

3. Träger (1) nach einem der vorhergehenden Ansprüche, wobei die Aufnahmebaugruppe (10) einen ersten Teil (11) entweder auf dem Halter (20) oder dem Trägerkörper (30) aufweist, der eingerichtet ist, um entlang eines zweiten Teils (12) des anderen des Halters (20) oder des Trägerkörpers (30) zu liegen, wenn sich der Halter (20) in der geschlossenen Position befindet.

4. Träger (1) nach Anspruch 3, wobei der erste und der zweite Teil (11, 12) eingerichtet sind, um aneinander anzuschlagen, um relativer Bewegung des ersten und des zweiten Teils (11, 12) in mindestens eine Richtung zu widerstehen.

5. Träger (1) nach Anspruch 3 oder Anspruch 4, wobei die Aufnahmebaugruppe (10) zwei erste Teile (13, 14) aufweist, wobei sich der zweite Teil (12) zwischen den ersten Teilen (13, 14) befindet, wenn sich der Halter (20) in der geschlossenen Position befindet.

6. Träger (1) nach Anspruch 5, wobei der zweite Teil (12) eingerichtet ist, um an einen ausgewählten der ersten Teile (13, 14) anzuschlagen, um relativer Bewegung des ersten und des zweiten Teils (12, 13, 14) in zwei einander entgegengesetzte Richtungen zu widerstehen.

7. Träger (1) nach einem der Ansprüche 3 bis 6, wobei der erste und/oder der zweite Teil (12, 13, 14) eine Öffnung aufweisen, durch welche sich eine rückziehbare Klinke (18) erstreckt, um den Halter (20) in der geschlossenen Position zu halten.

8. Träger (1) nach Anspruch 7, wobei die Klinke (18) ein schwenkbar bewegliches Element aufweist, das zwischen einer eingerasteten Position, in der sich die Klinke (18) durch mindestens eine Öffnung erstreckt, und einer ausgerasteten Position beweglich ist.

9. Träger (1) nach Anspruch 8, wobei die Klinke (18) auf den Trägerkörper (30) montiert ist.

10. Fahrzeug, das einen Träger (1) nach einem der Ansprüche 1 bis 9 aufweist.

## Revendications

1. Support (1) pour une galerie de toit, le support (1) comprenant :
un corps de support tubulaire (30) ayant une surface supérieure, une surface inférieure et deux côtés latéraux opposés, qui définissent une zone de stockage (32) pour stocker des articles à transporter, la zone de stockage (32) étant accessible depuis au moins une extrémité du corps de support (30) ; et
au moins un élément de retenue d'extrémité (20), chacun desdits au moins un élément de retenue d'extrémité (20) étant connecté au corps de support (30) à l'une desdites au moins une extrémité du corps de support (30) et pouvant être déplacé entre une position ouverte, dans laquelle l'accès à la zone de stockage (32) peut être réalisé à partir de ladite extrémité, et une position fermée, dans laquelle l'accès à partir de ladite extrémité est impossible ; et
un ensemble de maintien (10) agencé sous une région inférieure de la zone de stockage (32) pour maintenir l'élément de retenue (20) dans la position fermée ;
**caractérisé en ce que** :
l'élément de retenue d'extrémité (20) est connecté au corps de support (30) par deux pivots espacés (24, 25), les pivots espacés (24, 25) étant chacun sur un côté respectif des deux côtés latéraux opposés du corps de support (30), espacés le long du corps de support (30) à l'écart de ladite extrémité où l'accès à la zone de stockage (32) peut être réalisé, et les pivots espacés (24, 25) étant agencés de manière à pivoter autour d'un axe commun virtuel, l'axe commun virtuel s'étendant à travers une région supérieure de la zone de stockage (32) et entre la surface supérieure du corps de support (30) et un point intermédiaire entre les surfaces supérieure et inférieure du corps de support (30) ; et
l'élément de retenue d'extrémité (20) étant déplaçable entre les positions ouverte et fermée par mouvement de pivotement autour de chaque pivot (24, 25).

2. Support (1) selon la revendication 1, dans lequel l'élément de retenue d'extrémité (20) comprend une plaque (21) agencée, dans la position fermée, pour s'étendre par-dessus une ouverture de la zone de stockage (32) à cette extrémité, la plaque (21) comprenant deux bras (22, 23) qui s'étendent respectivement jusqu'à l'un des pivots (24, 25).

3. Support (1) selon l'une quelconque des revendications précédentes, dans lequel l'ensemble de maintien (10) comprend une première partie (11) sur l'un de l'élément de retenue (20) ou du corps de support (30), agencée de manière à être disposée le long d'une deuxième partie (12) de l'autre de l'élément de retenue (20) ou du corps de support (30) lorsque l'élément de retenue (20) est dans la position fermée.

4. Support (1) selon la revendication 3, dans lequel les première et deuxième parties (11, 12) sont agencées de manière à buter l'une contre l'autre pour résister au mouvement relatif des première et deuxième parties (11, 12) dans au moins une direction.

5. Support (1) selon la revendication 3 ou 4, dans lequel l'ensemble de maintien (10) comprend deux premières parties (13, 14), la deuxième partie (12) étant située entre les premières parties (13, 14) lorsque l'élément de retenue (20) est dans la position fermée.

6. Support (1) selon la revendication 5, dans lequel la deuxième partie (12) est agencée de manière à buter contre une partie sélectionnée parmi les premières parties (13, 14) pour résister au mouvement relatif des premières et deuxième parties (12, 13, 14) dans deux directions opposées l'une à l'autre.

7. Support (1) selon l'une quelconque des revendications 3 à 6, dans lequel au moins l'une des premières et deuxième parties (12, 13, 14) comprend une ouverture à travers laquelle un verrou rétractable (18) est agencé de manière à s'étendre pour maintenir l'élément de retenue (20) dans la position fermée.

8. Support (1) selon la revendication 7, dans lequel le verrou (18) comprend un organe déplaçable par pivotement qui peut être déplacé entre une position verrouillée dans laquelle le verrou (18) s'étend à travers au moins une ouverture et une position déverrouillée.

9. Support (1) selon la revendication 8, dans lequel le verrou (18) est monté sur le corps de support (30).

10. Véhicule comprenant un support (1) selon l'une quelconque des revendications 1 à 9.
